# EUROPEAN PATENT SPECIFICATION

(11) **EP 1 931 909 B1**
(45) Date of publication and mention of the grant of the patent: **17.11.2010**
(21) Application number: 06784306.0
(22) Date of filing: 30.08.2006
(51) Int. Cl.: F16N 39/00

(54) **DEVICE FOR DISTRIBUTION OF LUBRICATING MATERIALS WITH HIGH CONTENT OF HARD PARTICLES**
VORRICHTUNG ZUR VERTEILUNG VON SCHMIERMATERIALIEN MIT EINEM HOHEN GEHALT AN HARTPARTIKELN
DISPOSITIF DE REPARTITION DE MATIERES LUBRIFIANTES A TENEUR ELEVEE EN PARTICULES DURES

(30) Priority: 31.08.2005 SI 200500246
(43) Date of publication of application: 18.06.2008
(73) Proprietor: Pavcnik, Bojan, 3320 Velenje (SI)
(72) Inventor: Pavcnik, Bojan, 3320 Velenje (SI)
(74) Representative: Marn, Jure
(86) International application number: PCT/SI2006/000031
(87) International publication number: WO 2007/027161

(56) References cited:
- EP-A1- 1 273 341
- GB-A- 373 398
- GB-A- 2 248 406
- US-A1- 2003 026 165

## Description

### DESCRIPTION OF INVENTION

### Technical field

Mixing, lubrication; sedimentation of solid particles, pumping elements, rail transport

### Description of the problem

Using of standard pumping elements in pumps for lubricating materials results in pushing of lubricating material through the mesh for extraction of air bubbles toward entrance holes of the pumping element (See for example the document GB 2248406). When more demanding lubricants are used or materials with higher content of solid particles such as aluminum etc. are used there can occur lumping of solid particles underneath of pumping element due to pumping of lubricants, and with time lack of flow through the pumping element, and consequently to break down or undue friction of pumping elements. The essence of the solution of this technical problem is therefore to find such delivery of lubricating material with high content of solid particles to the pumping element that the homogeneity of lubricating material is established and consequently unhindered and permanent operation of lubricating element is ensured. In this case the greasers (lubricating devices) operate unhindered resulting in lower operating and maintenance costs and longer life of lubricating and rail devices. With increase of concentration of solid particles the viscosity of non-newtonian lubricating material in increased, proportionally to rise of viscosity rises also loading of pumping element and wear and tear of elements of the device.

### State of the art

The rail elements are usually lubricated using graphite grease which changes properties based on temperature, and this influences viscosity of the lubricating material and consequently characteristics of pumping elements in devices for distribution of lubricating materials. Consequently the reciprocating pumps are usually employed, these being relatively insensitive to pressure changes due to change of physical properties of lubricating materials.

The pumping elements are also sensitive to air bubbles content due to physical properties of the air. In order to reduce the sensitivity, these are usually extracted from the grease before entry to the pumping element, i.e. by pushing the lubricating material through the mesh for extraction of air bubbles.

In existing devices for distribution of lubricating materials taking advantage of modem more demanding lubricants with high contents of solid particles there is a problem due to increase of concentration of solid particles close to pumping elements causing the plugging, and consequently malfunction and damage of pumping elements.

Because of these problems the existing devices for distribution of lubricating material with high content of solid particles enable limited use of modem lubricating materials and require frequent cleaning, servicing, and filling of lubricating reservoirs.

### Description of new solution

The subject of this invention is a device for distribution of lubricating materials with high content of solid particles and solves above presented technical problem. The subject of this invention decreases lower wear of mechanical parts and consequently uninterrupted operation of devices and therefore extending their longevity.

The device comprises a reservoir from which the mixer pushes the lubricating material through the mesh for air bubbles extraction toward the entrance holes of the pumping element. The pumping element is driven by driving ex-centre which in turn drives a pumping element piston thereby pushing out lubricating material from the device for distribution of lubricating material. The driving ex-centre can be positioned on the same axis as the mixer for pushing of lubricating material through the mesh for air bubble extraction, however, it can also comprise its own axis. At the same time both driving ex-centre and mixer can have common driving mechanism, or the driving mechanism can be separated.

Below the pumping mechanism there is a bottom scraper (additional mixer) which provides for intensive circulation of material around the mixing element, and at the same time by mixing of lubricating material prevents sedimentation of solid particles contained in the lubricating material and therefore provides for homogeneity of the lubricating material. The bottom scraper can be driven by the same axle or driving mechanism as the driving ex-centre and mixer for pushing of lubricating material through the mesh for air bubbles extraction, however, they can have each their own driving mechanism.

Using known means for distribution of lubricating materials with high contents of solid particles the advantages of the proposed solution are in particular reliable operation, longer maintenance intervals for maintaining of this device, low use of the lubricating material with high efficiency (due to lower remnants of unused lubricating material), and even dosage of the lubricating material.

The proposed embodiment of the device for distribution of lubricating material with high content of solid particles does not cause increase in concentration of solid particles, resulting in lack of increase of the pumping material load. Due to providing of homogeneity of lubricating material larger reservoirs for lubricating material may be mounted onto the devices for distributing of lubricating materials thereby reducing number of cycles of filling of the reservoir, and that means the rationalization of the work and lubricating material, and has at the same time favorable effect on pollution reduction (less of waste lubricating material).

The invention is explained in greater detail below with description of preferred embodiment and by description of the figure whereby the figure is part of this patent application, and it shows as follows:

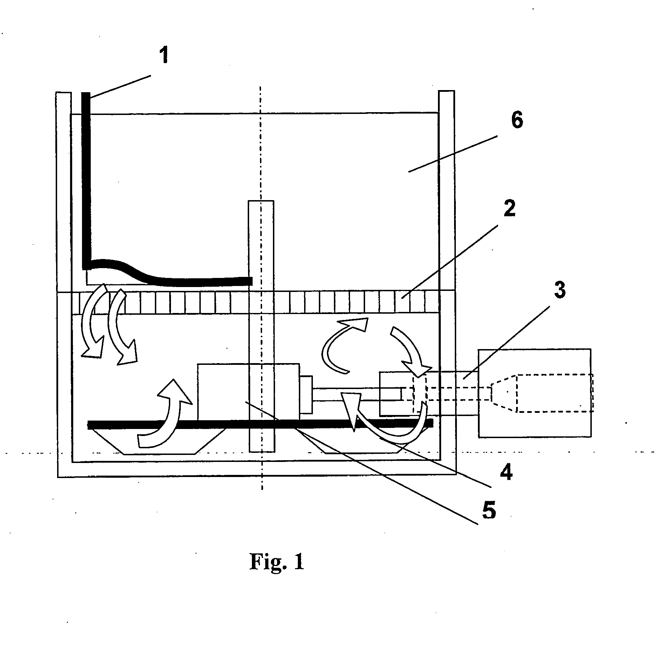

Figure 1 shows an upper mixer (1), a mesh for extraction of air bubbles (2), a pumping element (3), a bottom scraper (4), a driving ex-centre (5), a reservoir for lubricating material (6).

The preferred embodiment presents the reservoir for lubricating material (6) which is positioned in the upper part of the device. The upper mixer (1) pushes the lubricating material through the mesh for extraction of air bubbles (2). On the same axis as the mixer is positioned the driving ex-centre (5) in the lower part of the device, said ex-centre controlling a piston of the pumping element (3). On the bottom of the device under the pumping element (3) there is the bottom scraper (4), said bottom scraper (4) ensuring intensive circulation of the lubricating material around the mixing element (3) and at the same time mixing the lubricating material thereby preventing sedimentation of solid particles and consequently ensuring homogenous lubricating material (its homogeneity).

In the preferred embodiment the lower scraper (4) is positioned on the same axis as the upper mixer (1) and the driving ex-centre (5), however this does not limit an essence of this invention as all of these building elements can be positioned on own axis whereby using the reducing mechanism (gear, sprocket and chain, ...) each axis can have different number of revolutions, or each axis can have its own drive.

Also the preferred embodiment comprises the common driving axis in the vertical direction, however this also does not limit the essence of this invention as the driving axes can be positioned at any angle, or in horizontal direction.

Of course the device as described is not limited only to railway traffic, it can be used at any traffic on rails.

It should be self evident that this solution can be performed in different embodiment which does not alter the essence of the invention.

## Claims

1. The device for distribution of lubricating material with high contents of solid particles, **characterized in that** under a pumping elements (3) or plurality thereof there is positioned a scraper (4) or plurality thereof which by mixing of a lubricating material provides its homogeneity.

2. The device according to any of the preceding claims, **characterized in that** it comprises an upper mixer (1), a mesh for extraction of air bubbles (2), a pumping element (3), a bottom scraper (4), a driving ex-centre (5), and a reservoir for lubricating material (6).

3. The device according to any of the preceding claims, **characterized in that** from the reservoir for lubricating material (6) the upper mixer (1) pushes the lubricating material through the mesh for extraction of air bubbles (2), the driving ex-centre (5) at the same time controls a piston of the pumping element (3), and the bottom scraper (4) provides for intensive circulation of the lubricating material around the pumping element (3) and at the same time mixes
the lubricating material whereby the sedimentation of the solid particles is being prevented and consequently the homogeneity of the lubricating material is being ensured.

4. The device according to any of the preceding claims, **characterized in that** on the same axis there are positioned the upper mixer (1) for pushing of the mixing material through the mesh for extraction of air bubbles (2), the driving ex-centre (5) which controls the piston of the pumping element (3), and the bottom scraper (4) which provides for intensive circulation around the pumping element (3).

5. The device according to any of the preceding claims, **characterized in that** the bottom scraper is of such embodiment to provide for intensive circulation of the lubricating material around the pumping element.

6. The device according to any of the preceding claims, **characterized in that** the bottom scraper is positioned on the bottom of the device thereby preventing sedimentation of solid particles.

7. The device according to any of the preceding claims, **characterized in that** the bottom scraper for ensuring the homogeneity of the lubricating material is positioned on the same axis as the driving mechanism of the pumping element.

8. The device according to any of the preceding claims, **characterized in that** the bottom scraper for ensuring the homogeneity of the lubricating material is positioned on the same axis as the mixer for extraction of air bubbles.

9. The device according to any of the preceding claims, **characterized in that** the bottom scraper for ensuring the homogeneity of lubricating material is driven by its own driving mechanism.

10. The device according to any of the preceding claims, **characterized in that** the operation of the device is provided by single driving mechanism or plurality thereof.

## Patentansprüche

1. Der Apparat für Distribuierung des Gleitmaterials mit einem hohen Gehalt harter Teile, **gekennzeichnet dadurch, dass** unter einem Pumpenelement (3) oder mehreren ein Scraper (4) oder mehrere positioniert sind, die mit dem Mischen des Gleitmaterials seine Homogenität versichern.

2. Der Apparat aus irgendeinem der Ansprüche **gekennzeichnet dadurch, dass** er den oberen Mixer (1) beinhaltet, eine Matte für das Absaugen von Luftblasen (2), ein Pumpenelement (3), den unteren Scraper (4), Exzentrum des Antriebs (5) und ein Reservoir für das Gleitmaterial (6).

3. Der Apparat aus irgendeinem der Ansprüche, **gekennzeichnet dadurch, dass** der obere Mixer (1) das Gleitmaterial (6) aus dem Reservoir schiebt durch die Matte für das Absaugen von Luftblasen (2), Exzentrum des Antriebs (5) das zu der gleichen Zeit das Piston des Pumpenelements (3) leitet, und der untere Scraper versichert eine intensive Zirkulation des Gleichmaterials um das Pumpenelement herum (3) und zu der gleichen Zeit das Gleitmaterial mischt, wobei die Sedimentation der harten Teile verhindert wird und daraus folgt, dass die Homogenität des Gleitmaterials versichert wird.

4. Der Apparat aus irgendeinem der Ansprüche, **gekennzeichnet dadurch, dass** auf der gleichen Achse positioniert sind der obere Mixer (1) für das Schieben des Mischmaterials durch die Matte für das Absaugen von Luftblasen (2), das Exzentrum des Antriebs (5), das das Piston des Pumpenelements (3) leitet und der untere Scraper (4), der eine intensive Zirkulation um das Pumpenelement (3) herum versichert.

5. Der Apparat aus irgendeinem der Ansprüche, **gekennzeichnet dadurch, dass** der untere Scraper eine solche Ausführungsform hat, die eine intensive Zirkulation des Gleitmaterials um das Pumpenelement (3) herum versichert.

6. Der Apparat aus irgendeinem der Ansprüche, **gekennzeichnet dadurch, dass** der untere Scraper auf dem Boden des Apparates positioniert ist, womit er eine Sedimentierung der harten Teile verhindert.

7. Der Apparat aus irgendeinem der Ansprüche, **gekennzeichnet dadurch, dass** der untere Scraper für das Versichern der Homogenität des Gleitmaterials sich auf der gleichen Achse befindet wie das Antriebsmechanismus des Pumpenelements.

8. Der Apparat aus irgendeinem der Ansprüche, **gekennzeichnet dadurch, dass** der untere Scraper für das Versichern der Homogenität des Gleitmaterials sich auf der gleichen Achse befindet wie der Mixer für das Absaugen von Luftblasen.

9. Der Apparat aus irgendeinem der Ansprüche, **gekennzeichnet dadurch, dass** der untere Scraper für das Versichern der Homogenität des Oleitmaterials von seinem eigenen Antriebsmechanismus geleitet wird.

10. Der Apparat aus irgendeinem der Ansprüche, **gekennzeichnet dadurch, dass** das Arbeiten des Apparats durch ein Antriebsmechanismus oder mehrere ermöglicht wird.

## Revendications

1. Le dispositif de distribution du produit lubrifiant à haute teneur en particules solides, se **caractérise par le fait qu'**en dessous du ou des dispositif(s) de pompage (3), est positionné un ou plusieurs racleur(s) (4) procurant l'homogénéité du produit lubrifiant par un mouvement rotatif.

2. Conformément aux revendications précédemment mentionnées, le dispositif se **caractérise par le fait qu'**il comprend un malaxeur situé dans la partie supérieure (1), d'une grille prévue pour l'extraction des bulles d'air (2), d'un dispositif de pompage (3), d'un racleur de fond (4), d'une came excentrique (5), et d'un réservoir de lubrifiant (6).

3. Conformément aux revendications précédemment mentionnées, le dispositif est **caractérisé par le fait que** le malaxeur (1) du réservoir de lubrifiant (6) situé dans la partie supérieure pousse le produit lubrifiant à travers les mailles de la grille afin d'en extraire les bulles d'air (2), au même moment la came excentrique (5) actionne le dispositif de pompage (3), et le racleur de fond (4) assure la constante circulation du produit lubrifiant autour du dispositif de pompage (3) tout en le mélangeant ce qui permet ainsi d'empêcher la sédimentation des particules solides et donc assurer l'homogénéité du produit lubrifiant.

4. Conformément aux revendications précédemment mentionnées, le dispositif est **caractérisé par le fait que** sur le même axe sont positionnés le malaxeur situé dans la partie supérieure (1) prévu pour pousser le produit lubrifiant ainsi malaxé à travers les mailles de la grille afin d'en extraire les bulles d'air (2), la came excentrique (5) chargée d'actionner le piston appartenant au dispositif de pompage (3), et le racleur de fond (4) qui assure la constante circulation du produit lubrifiant autour du dispositif de pompage (3).

5. Conformément aux revendications précédemment mentionnées, le dispositif est **caractérisé par le fait que** le racleur de fond est disposé de telle manière à réaliser une circulation optimale du produit lubrifiant autour de l'élément de pompage.

6. Conformément aux revendications précédemment mentionnées, le dispositif est **caractérisé par le fait que** le racleur de fond est positionné à la base du dispositif dans le but d'empêcher la sédimentation des particules solides.

7. Conformément aux revendications précédemment mentionnées, le dispositif est **caractérisé par le fait que** le racleur de fond chargé d'assurer l'homogénéité du produit lubrifiant est positionné sur le même axe que le mécanisme chargé de mettre en mouvement le dispositif de pompage.

8. Conformément aux revendications précédemment mentionnées, le dispositif est **caractérisé par le fait que** le racleur de fond chargé d'assurer l'homogénéité du produit lubrifiant est positionné sur le même axe que le malaxeur prévu pour l'extraction des bulles d'air.

9. Conformément aux revendications précédemment mentionnées, le dispositif est **caractérisé par le fait que** le racleur de fond chargé d'assurer l'homogénéité du produit lubrifiant est actionné par le moteur de son propre mécanisme.

10. Conformément aux revendications précédemment mentionnées, le dispositif est **caractérisé par le fait que** le fonctionnement du dispositif est assuré par un ou plusieurs système(s) d'entrainement.
